Europäisches Patentamt

European Patent Office

Office européen des brevets

(19)

(11) Veröffentlichungsnummer: **0 082 351**
**B1**

(12) **EUROPÄISCHE PATENTSCHRIFT**

(45) Veröffentlichungstag der Patentschrift:
**12.06.85**

(21) Anmeldenummer: **82110977.4**

(22) Anmeldetag: **27.11.82**

(51) Int. Cl.⁴: **C 01 G 45/00,** C 01 G 45/02,
C 01 G 39/00, C 01 G 45/06,
C 01 G 45/10, C 22 B 3/00

(54) **Verfahren zur Entfernung von Molybdän aus wässrigen Mangansalzlösungen.**

(30) Priorität: **18.12.81 DE 3150139**

(43) Veröffentlichungstag der Anmeldung:
**29.06.83 Patentblatt 83/26**

(45) Bekanntmachung des Hinweises auf die Patenterteilung:
**12.06.85 Patentblatt 85/24**

(84) Benannte Vertragsstaaten:
**BE DE FR GB**

(56) Entgegenhaltungen:
**CHEMICAL ABSTRACTS, Band 74, Nr. 11, 15. März 1971, Seite 459, Nr. 60149t, Columbus, Ohio, USA G. OZOL-KALNINS, "Adsorption purification of a manganese electrolyte by manganese dioxide"**
**CHEMICAL ABSTRACTS, Band 70, Nr. 25, 23. Juni 1969, Seite 470, Nr. 120757u, Columbus, Ohio, USA S. MELONI et al., "Behavior of 14 radionuclides on manganese dioxide columns"**
**CHEMICAL ABSTRACTS, Band 73, Nr. 16, 19. Oktober 1970, Seite 437, Nr. 83220c, Columbus, Ohio, USA G. OZOL-KALNINS, "Electrochemical purification of a manganese electrolyte"**

(73) Patentinhaber: **HOECHST AKTIENGESELLSCHAFT, Postfach 80 03 20, D-6230 Frankfurt am Main 80 (DE)**

(72) Erfinder: **Preisler, Eberhard, Dr., Bertolt-Brecht-Strasse 55, D-5042 Erftstadt-Liblar (DE)**
Erfinder: **Hofmann, Bernhard, Dr., Alleestrasse 48, D-5030 Hürth-Knapsack (DE)**
Erfinder: **Nolte, Gerhard, Dr., Siegfried-von-Westerburg-Strasse 19, D-5042 Erftstadt-Lechenich (DE)**

## Beschreibung

Die vorliegende Erfindung betrifft ein Verfahren zur Entfernung von Molybdän' aus wässerigen Mangan(II)salzlösungen durch Adsorption des Molybdäns an Braunstein und Abtrennen von Adsorbens und Adsorbat von der gereinigten Mangan(II)salzlösung.

Mangansalzlösungen, die durch Auflösen natürlich vorkommender Erze gewonnen wurden, enthalten oft als Verunreinigung Molybdän, das bei der Weiterverarbeitung dieser Lösungen hinderlich sein kann. Dies trifft z.B. zu, wenn sie zum Zwecke der Braunsteingewinnung hergestellt wurden, so dass sie vor ihrer Weiterverarbeitung gereinigt werden müssen. Besonders bei der elektrochemischen Erzeugung von Braunstein wird der überwiegende Teil der in der als Elektrolyt dienenden Lösung vorhandenen Molybdänmenge in das erzeugte Produkt überführt.

Zur Entfernung von Fremdmetallionen aus solchen Mangansalzlösungen werden üblicherweise diese Verunreinigungen durch Neutralisation der Lösungen mit Hilfe von Mangan(II)oxid sowie Alkali- oder Erdalkalihydroxiden oder -carbonaten ausgefällt (z.B. Eisen und Aluminium sowie teilweise Nickel, Kobalt, Kupfer, Arsen und Antimon). In einem weiteren Schritt werden dann die Lösungen mit Schwefelwasserstoff oder einem wasserlöslichen Sulfid behandelt, wodurch die restlichen Schwermetalle als Sulfide ausgefällt werden (DE-C Nr. 2057939). Molybdän lässt sich auf diese Weise nur teilweise und — bezüglich der gegenwertigen Anforderungen an die Reinheit etwa des elektrochemisch hergestellten Braunsteins — nur sehr unzureichend aus den Lösungen entfernen.

Es wurde daher schon vorgeschlagen (DE-A Nr. 3114559), das in wässerigen Mangansalzlösungen als Verunreinigung enthaltene Molybdän an körnigem, auf elektrolytischem Wege abgeschiedenen Braunstein zu adsorbieren. Dieses Verfahren hat jedoch den Nachteil, dass man wegen der geringen aktiven Oberfläche des Adsorbens wesentlich grössere Mengen desselben einsetzen muss. Diese müssen dann aus Kostengründen regeneriert werden, was durch eine Spülung mit einer alkalischen Lösung geschehen kann. Das erfordert entsprechende aufwendige technische Vorrichtungen und Betriebsmittel.

Es sind auch analytische Untersuchungen von Seewasser bekannt, nach denen Proben von Seewasser z.B. mit Braunstein in Kontakt gebracht werden, wobei Metallionen, unter anderem auch Molybdänionen, zur Anreicherung an Braunstein adsorbiert werden. Zu diesem Zweck wird dem Wasser eine Mangansulfatlösung sowie Bromwasser oder Kaliumpermanganat zugegeben und dadurch Braunstein in allerfeinster Verteilung ausgefällt, oder es wird dem Wasser eine Suspension aus frisch gefälltem Braunstein zugefügt. Nach Erreichen der Adsorptionsgleichgewichte wird der Braunsteinniederschlag abfiltriert.

Aufgabe der vorliegenden Erfindung ist es, ein Verfahren bereitzustellen, das eine Abtrennung des Molybdäns aus einer verhältnismässig konzentrierten Mangansalzlösung (etwa 0,5 bis 2M) so weit gestattet, dass die gereinigte Lösung nicht mehr als 0,1 mg/l Molybdän enthält. Hierfür eignet sich die an sich bekannte Adsorption an Braunstein im Prinzip deswegen, weil keine systemfremden Reagenzien in die Lösungen eingeschleppt werden.

Die für analytische Zwecke entwickelten Laborverfahren benutzen zur Adsorption oder Copräcipitation des Molybdäns mit in der betreffenden Lösung erzeugten Braunstein auf bestimmte pH-Werte von 3 bis 4 abgepufferte Lösungen und ziemlich langen Verweilzeiten von z.T. mehreren Tagen. Während dabei der Braunstein heiss gefällt wird, erfolgt die Filtration bei Raumtemperatur. Überträgt man diese Bedingungen auf konzentrierte Salzlösungen und auf technische Dimensionen, so findet man, dass eine wirtschaftlich tragbare Molybdänabtrennung bis zur geforderten Reinheit nicht möglich ist. Die Gründe hierfür liegen darin, dass Pufferzusätze nicht erwünscht sind, dass ferner der Braunstein in äusserst feinteiliger Form entsteht, welcher jedes Filter entweder passiert oder schnell verstopft, und dass die ziemlich hohe Viskosität der Salzlösungen jede Sedimentation und Filtration des Braunsteins zusätzlich erschwert. Auch ein Erhitzen der Aufschlämmung auf 90 bis 95°C verbessert die Filtrationsfähigkeit nur wenig, verschlechtert aber die Adsorptionsfähigkeit des Braunsteins erheblich.

Aus „Chemical Abstracts", Bd. 74, S. 459, Nr. 60149t, ist ein Verfahren zur Entfernung von Molybdän aus Manganelektrolytlösungen bekannt, wobei man mit Hilfe von Kaliumpermanganat im Elektrolyten einen Teil des Mangans zu Braunstein oxydiert und daran das Molybdän adsorbiert.

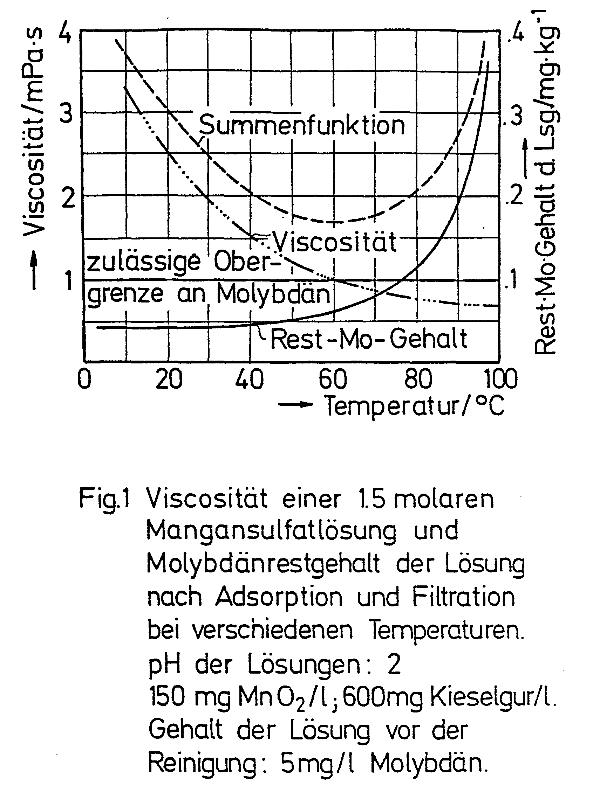

Überraschenderweise wurde nun gefunden, dass die spezifische Adsorptionsfähigkeit des Braunsteins keine lineare Funktion der Temperatur ist, sondern — ausgehend z.B. von einer Temperatur von 100°C — mit fallender Temperatur zunächst erheblich verbessert wird, und bei zunehmend erniedrigten Temperaturen nicht mehr wesentlich abnimmt. Dies ist in Fig. 1 dargestellt.

Umgekehrt nimmt die Viskosität der Lösung, welche wesentlich die Filtrierbarkeit mitbestimmt, erst bei deutlich niedrigeren Temperaturen kräftig zu, so dass sich ein mittlerer Temperaturbereich ergibt, in dem man eine überdurchschnittliche Verbesserung von Reinheit und Filtrierbarkeit erhält im Vergleich mit dem Fall einer linearen Temperaturabhängigkeit dieser beiden Parameter. Die Summenfunktion in Fig. 1 drückt dies durch ihr Minimum aus.

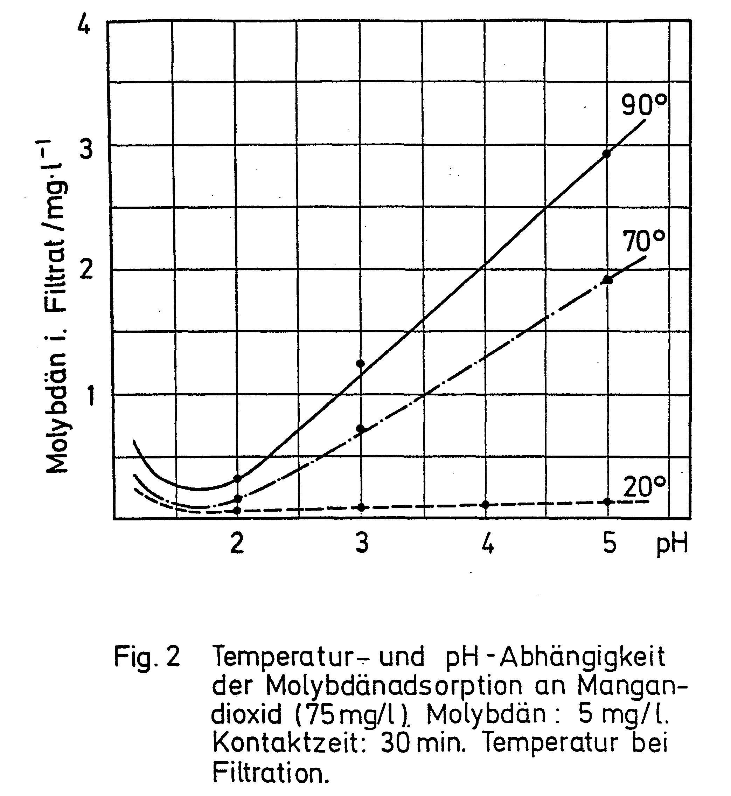

Ferner ergab sich, dass man bei Raumtemperatur bereits bei pH-Werten von etwa 5 die maximale Adsorption des Molybdäns erreicht hat, dass aber bei höheren Temperaturen eine Verminderung des pH-Wertes unter 5 noch eine erhebliche Verbesserung der Adsorption mit sich bringt, so dass selbst bei 70°C ein entsprechendes Absenken des pH-Wertes noch fast die Werte der Adsorption bei 20°C zu erreichen gestattet (Fig. 2).

Im einzelnen besteht die vorliegende Erfindung darin, dass man zur Enfernung des Molybdäns in der Mangan(II)salzlösung einen pH-Wert kleiner als 2,6, vorzugsweise zwischen 1,5 und 2,5 einstellt, dann bei einer Temperatur zwischen 50 und 80, vorzugsweise 55 bis 65°C ein Oxidationsmittel, welches Mangan(II)verbindungen zu Mangan(IV)verbindungen zu oxidieren imstande ist, zugibt, dabei einen geringen Teil des gelösten Mangan(II)salzes zu Braunstein oxidiert und man den entstehenden Niederschlag nach einer Kontaktzeit mit der Mangan(II)salzlösung von mindestens 15, vorzugsweise von 30 bis 60 min, von dieser Lösung bei der genannten Temperatur abtrennt.

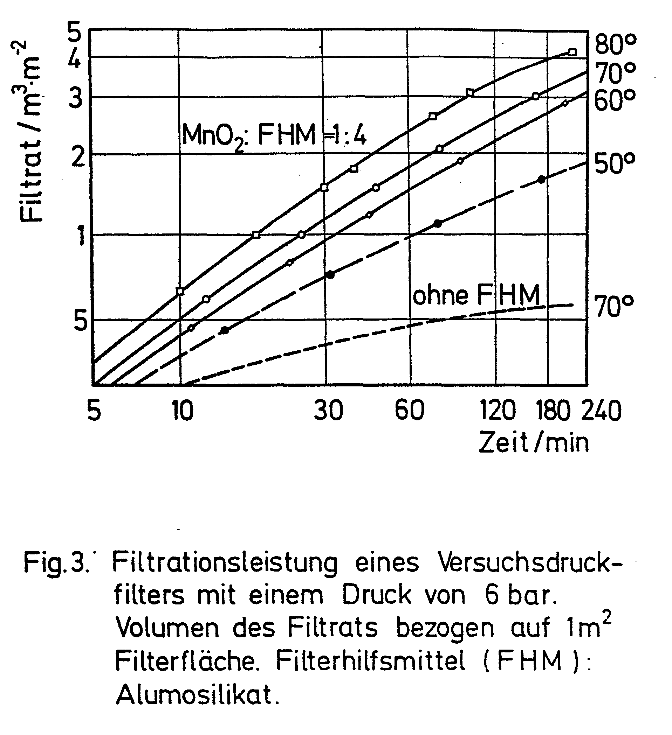

Als Oxidationsmittel ist in diesem Falle Natriumhypochlorit oder Kaliumpermanganat besonders geeignet, wobei das Oxidationsmittel vorteilhafterweise in solchen Mengen eingesetzt wird, dass die erzeugte Braunsteinmenge 50 bis 300 mg/l beträgt. Um bei diesen Gegebenheiten auf technisch annehmbare Filtrationsleistungen zu kommen, genügt nunmehr der Zusatz eines gegenüber den Mangansalzlösungen inerten Filterhilfsmittels zu der Braunsteinsuspension. In Fig. 3 sind in doppeltlogarithmischer Darstellung ein Vergleich der Filtrationsleistungen ohne und mit Filterhilfsmittelzusatz sowie der Temperatureinfluss, gemessen an einem Versuchsdruckfilter, dargestellt. Eine Filtration bei Raumtemperatur würde auch bei Verwendung eines Filterhilfsmittels zu einem erheblich höheren Filtrationsaufwand führen. Als solche Filterhilfsmittel sind in erster Linie geeignet als Perlit bekannte gemahlene Silikate vulkanischen Ursprungs, aber auch Diatomeernerde (Kieselgur).

Es empfiehlt sich dabei, das Filterhilfsmittel in einem Gewichtsverhältnis zum Braunsteinniederschlag von 3:1 bis 8:1 einzusetzen.

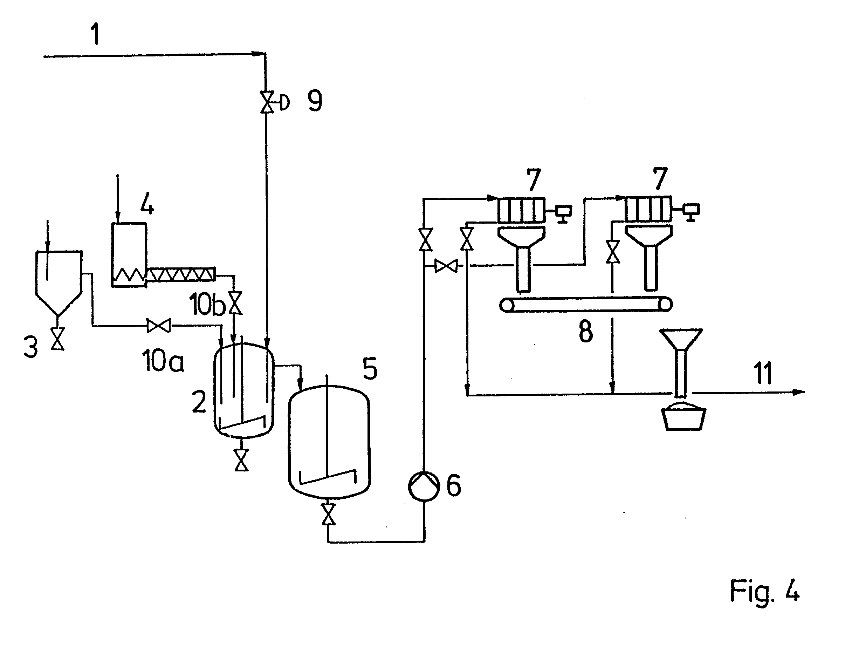

Es hat sich ferner gezeigt, dass es möglich ist, durch kontinuierliche Zugabe, sowohl eines Oxidationsmittels wie Kaliumpermanganat oder Alkalihypochlorit als auch eines Filterhilfsmittels, zu einem gleichmässigen Strom der Mangansalzlösung mit anschliessender Filtration z.B. über ein Saugtrommelfilter das Verfahren vollkontinuierlich oder über zwei Kammerfilterpressen quasi kontinuierlich zu gestalten. Dies möge im folgenden anhand Fig. 4 erläutert werden:

Über eine Rohrleitung 1 läuft kontinuierlich eine auf einen bestimmten pH-Wert, beispielsweise von 2,5, eingestellte Mangan(II)salzlösung in einem mit einem Rührwerk versehenen Mischbehälter 2. Die zufliessenden Mengen der Salzlösung werden von dem Volumenmesser 9 gemessen. Gleichzeitig werden in den Mischbehälter aus dem Ansatzbehälter 3 eine gesättigte Kaliumpermanganatlösung und aus dem Behälter 4 Filterhilfsmittel eingetragen, wobei die eingetragenen Mengen jeweils durch die von dem Volumenmesser 9 gesteuerten Ventile 10a und 10b reguliert werden.

Durch Einleinten von Dampf wird die Temperatur des Mischbehälters 2 auf einen bestimmten Wert, etwa 65°C erhitzt und gehalten.

Über einen durch eine Schürze abgedeckten Überlauf tritt die Aufschlämmung von aus Kaliumpermanganat mit Mangan(II)salz gebildetem hydratisiertem Mangandioxid und Filterhilfsmittel in den Verweilbehälter 5. Dieser ist so bemessen, dass bei Vollastbetrieb eine Mindestverweilzeit von 30 min gewährleistet ist. Über die Pumpe 6 wird die Aufschlämmung auf eine Filterpresse 7 gegeben, und das ablaufende Filtrat 11 stellt die gereinigte Lösung dar. Der auf dem Transportband 8 gesammelte Filterkuchen kann gewaschen und über entsprechende Einrichtungen der Deponie oder der Weiterverwendung zugeführt werden. Zwei Filterpressen können im Wechsel miteinander betrieben werden.

An Stelle zweier Filterpressen kann auch ein Trommelsaugfilter eingesetzt werden, ebenso ist die Art der Beheizung der Rührbehälter nicht auf die direkte Dampfheizung beschränkt. Wesentlich ist jedoch, die Temperatur der Lösung so hoch zu wählen, dass die Aufschlämmung im Behälter 5 die für die Filtration notwendige Temperatur hat. Dies hängt von der Wärmeisolierung des Behälters 5 und von der Durchsatzrate ab.

In den nachfolgenden Beispielen 1 und 2 werden zum Vergleich Versuche beschrieben, welche eine Übertragung der aus den analytischen Arbeiten bekannten Bedingungen auf höherkonzentrierte Mangansalzlösungen in einem halbtechnischen Massstab darstellen, während den Beispielen 3 und 4 das erfindungsgemässe Verfahren in verschiedenen Ausführungsformen zugrundeliegt.

*Beispiel 1:*

5 m³ einer Mangansulfatlösung mit 60 g/l Mangan und 5 mg/l Molybdän wurde auf einen pH-Wert von 3,8 eingestellt, auf ca. 90-95°C erhitzt und unter Rühren mit 200 mg/l Kaliumpermanganat erhitzt. Es entstanden etwa 280 mg/l Braunstein. Nach Abkühlung der Lösung wurde der entstandene locker-flockige Braunstein mittels einer Kammerfilterpresse von 1 m² Filterfläche und 6 bar Pumpendruck abfiltriert. Nach einem Durchlauf von ca. 0,8 m³ wurde ein klares Filtrat erhalten. Die Filtration wurde nach weiteren 10 h abgebrochen, da nur 0,3 m³ klares Filtrat erhalten worden waren. Der Molybdängehalt der Lösung betrug 0,08 mg/l.

*Beispiel 2:*

Der Versuch von Beispiel 1 wurde wiederholt, wobei jedoch die Temperatur der Aufschlämmung auf 90°C gehalten wurde. Klarlauf wurde ebenfalls nach ca. 0,8 m³ erzielt. Nach 10 h waren 1,5 m³ klare Lösung abfiltriert. Der Molybdängehalt betrug 0,9 mg/l.

*Beispiel 3:*

5 m³ einer Manganchloridlösung mit 60 g/l Mangan und 5 mg/l Molybdän wurden auf einen pH-Wert von 2,5 eingestellt und mit 400 ml einer Bleichlauge versetzt, die 80 g/l aktives Chlor enthielt. Es entstanden etwa 100 mg/l Braunstein. Die Suspension wurde auf 60°C erhitzt und nach einer Verweilzeit von 30 min mit 2,5 kg Kieselgur versetzt und wie in Beispiel 1 filtriert. Klarlauf wurde nach weniger als 0,05 m³ erzielt. Nach 5 h war die Filtration der 5-m³-Lösung beendet. Es wurden im Filtrat 0,1 mg/l Molybdän gefunden.

*Beispiel 4:*

Eine 5 mg/l Molybdän enthaltende Mangansulfatlösung mit 60 g/l Mangan von pH 2 wurde bei kontinuierlichem Zulauf derselben in einem Rührbehälter auf 60°C erwärmt und dem zulaufenden Volumen proportional mit einer gesättigten Kaliumpermanganatlösung in einer Menge von 100 mg KMnO₄ pro Liter Mangansulfatlösung und über eine Eintragsschnecke mit einem Alumosilikat als Filterhilfsmittel versetzt. Eine der zulaufenden Menge an Mangansulfatlösung proportionale Menge der im Rührbehälter entstehenden Aufschlämmung floss an einem durch eine Schürze geschützten Überlauf aus dem unteren Behälterbereich ab in einen Verweilbehälter und wurde anschliessend über 2 alternativ betriebene Filterpressen abfiltriert. Die mittlere Verweilzeit der Lösung im Verweilbehälter betrug etwa 45 min. Die Filterpressen wurden bis zur vollen Ausnutzung des Kammervolumens benutzt. Man erreichte eine Filtrationsgeschwindigkeit im zeitlichen Mittel von 0,85 m³/m²· h, der Molybdängehalt des Filtrats schwankte zwischen 0,05 und 0,08 mg/l.

## Patentansprüche

1. Verfahren zur Entfernung von Molybdän aus wässerigen Mangan(II)salzlösungen, indem man durch Zugabe eines Oxidationsmittels, welches Mangan(II)verbindungen zu Mangan(IV)verbindungen zu oxydieren imstande ist, einen geringen Teil des gelösten Mangan(II)salzes zu Braunstein oxydiert, an dem dabei entstehenden Braunsteinniederschlag das Molybdän adsorbiert und anschliessend Adsorbens und Adsorbat von der gereinigten Mangan(II)salzlösung abtrennt, dadurch gekennzeichnet, dass man in der Mangansalzlösung einen pH-Wert von kleiner 2,6 einstellt, dann bei einer Temperatur zwischen 50 und 80°C das Oxidationsmittel zugibt und nach einer Kontaktzeit des Niederschlags mit der Mangan(II)-salzlösung von mindestens 15 min letzteren von dieser Lösung bei der genannten Temperatur abtrennt.

2. Verfahren nach Anspruch 1, dadurch gekennzeichnet, dass man als Oxidationsmittel Kaliumpermanganat oder Natriumhypochlorit verwendet.

3. Verfahren nach einem der Ansprüche 1 oder 2, dadurch gekennzeichnet, dass man einen pH-Wert zwischen 1,5 und 2,5 einstellt.

4. Verfahren nach einem der Ansprüche 1 bis 5, dadurch gekennzeichnet, dass man während der Kontaktzeit der Salzlösung mit dem Niederschlag und der Abtrennung von letzterem eine Temperatur zwischen 55 und 65°C einhält.

5. Verfahren nach einem der Ansprüche 1 bis 4, dadurch gekennzeichnet, dass man den Braunsteinniederschlag in Gegenwart eines inerten Filterhilfsmittels von der Mangansalzlösung abfiltriert.

6. Verfahren nach Anspruch 5, dadurch gekennzeichnet, dass man das Filterhilfsmittel in einem Gewichtsverhältnis zum Braunsteinniederschlag von 3:1 bis 8:1 einsetzt.

7. Verfahren nach einem der Ansprüche 1 bis 6, dadurch gekennzeichnet, dass man das Oxidationsmittel in einer solchen Menge einsetzt, dass die erzeugte Braunsteinmenge 50 bis 300 mg/l beträgt.

8. Verfahren nach einem der Ansprüche 1 bis 7, dadurch gekennzeichnet, dass als Ausgangsprodukt 0,5 bis 2M Mangan(II)salzlösungen eingesetzt werden.

## Claims

1. Process for removing molybdenum from aqueous manganese(II)salt solutions by oxidizing a small proportin of the dissolved manganese(II)salt to manganese dioxide by the addition of an oxidant capable of oxidizing manganese(II)compounds to manganese(IV)compounds, adsorbing the molybdenum on the resulting manganese dioxide precipitate, and separating adsorbent and adsorbate from the purified manganese(II)salt solution, which comprises: establishing a pH-value lower than 2.6 in the manganese salt solution, adding the oxidant at a temperature between 50 and 80°C and, after a contact period of the precipitate with the manganese(II)salt solution of at least 15 min, separating the precipitate from the solution at the temperature indicated.

2. Process as claimed in Claim 1, wherein the oxidant is potassium permanganate or sodium hypochlorite.

3. Process as claimed in Claim 1 or 2, wherein a pH-value between 1.5 and 2.5 is established.

4. Process as claimed in any of Claims 1 to 3, wherein a temperature between 55 and 65°C is maintained during the contact period of the salt solution with the precipitate and separation of the latter therefrom.

5. Process as claimed in any of Claims 1 to 4, wherein the manganese dioxide precipitate is filtered off from the manganese salt solution, in the presence of an inert filter aid.

6. Process as claimed in Claim 5, wherein the filter aid and manganese dioxide precipitate are used in a ratio by weight of 3:1 to 8:1.

7. Process as claimed in any of Claims 1 to 6, wherein the oxidant is used in a quantity sufficient for the production of 50 to 300 mg/l of manganese dioxide.

8. Process as claimed in any of Claims 1 to 7, wherein 0.5 to 2M manganese(II)solutions are used as feed material.

## Revendications

1. Procédé d'élimination de molybdène de solutions aqueuses de sels de manganèse (II) en oxydant une faible partie du sel de manganèse (II) dissous en bioxyde de manganèse par addition d'un oxydant susceptible d'oxyder les composés de manganèse (II) en composés de manganèse (IV), en adsorbant le molybdène sur le précipité de bioxyde de manganèse ainsi formé et en séparant, ensuite, l'adsorbant et l'adsorbat de la solution de sel de manganèse (II) purifiée, caractérisé en ce que l'on établit, dans la solution de sel de manganèse, un pH inférieur à 2,6, puis en ce que l'on ajoute l'oxydant à une température comprise entre 50 et 80°C et, après une durée de contact du précipité avec la solution de sel de manganèse (II) d'au moins 15 min, en ce que l'on sépare ce dernier de la solution à la température indiquée.

2. Procédé selon la revendication 1, caractérisé en ce que l'on utilise le permanganate de potassium ou l'hypochlorite de sodium comme oxydant.

3. Procédé selon l'une des revendications 1 ou 2, caractérisé en ce que l'on établit un pH compris entre 1,5 et 2,5.

4. Procédé selon l'une des revendications 1 à 3, caractérisé en ce que, pendant la durée de contact de la solution saline avec le précipité et la séparation de ce dernier, on maintient une température de 55 à 65°C.

5. Procédé selon l'une des revendications 1 à 4, caractérisé en ce que l'on sépare le précipité de bioxyde de manganèse de la solution de sel de manganèse par filtration en présence d'un auxiliaire de filtration inerte.

6. Procédé selon la revendication 5, caractérisé en ce que l'on utilise l'auxiliaire de filtration et le précipité de bioxyde de manganèse dans un rapport pondéral de 3:1 à 8:1.

7. Procédé selon l'une des revendications 1 à 6, caractérisé en ce que l'on utilise l'oxydant en quantité suffisante pour produire de 50 à 300 mg/l de bioxyde de manganèse.

8. Procédé selon l'une des revendications 1 à 7, caractérisé en ce que l'on utilise, comme produit de départ, des solutions 0,5 à 2M de sels de manganèse (II).

Fig.1 Viscosität einer 1.5 molaren
Mangansulfatlösung und
Molybdänrestgehalt der Lösung
nach Adsorption und Filtration
bei verschiedenen Temperaturen.
pH der Lösungen: 2
150 mg $MnO_2$/l ; 600mg Kieselgur/l.
Gehalt der Lösung vor der
Reinigung: 5mg/l Molybdän.

Fig. 2  Temperatur– und  pH –Abhängigkeit
der Molybdänadsorption an Mangandioxid (75 mg/l) Molybdän : 5 mg/l.
Kontaktzeit: 30 min. Temperatur bei
Filtration.

Fig.3. Filtrationsleistung eines Versuchsdruckfilters mit einem Druck von 6 bar.
Volumen des Filtrats bezogen auf $1m^2$
Filterfläche. Filterhilfsmittel ( FHM ):
Alumosilikat.

Fig. 4